# EUROPÄISCHE PATENTANMELDUNG

(11) **EP 4 484 175 A1**
(43) Veröffentlichungstag der Anmeldung: **01.01.2025**
(21) Anmeldenummer: 24180085.3
(22) Anmeldetag: 05.06.2024
(51) Int. Cl.: B42D 25/382

(54) **SICHERHEITSVORRICHTUNG MIT MASCHINENLESBAREN MERKMALSBEREICHEN, WERTDOKUMENT UND PRÜFVERFAHREN**

(30) Priorität: 29.06.2023 DE 102023117185
(71) Anmelder: Giesecke+Devrient Currency Technology GmbH, 81677 München (DE)
(72) Erfinder: Pfeiffer, Matthias, 81677 München (DE); Hampp, Gerhard, 81677 München (DE); Huber, Alexander, 83703 Gmund (DE)
(74) Vertreter: Zeuner Summerer Stütz

(57) **Zusammenfassung**

Die Erfindung betrifft eine Sicherheitsvorrichtung (20) mit einem Folienträger (22) mit gegenüberliegenden Hauptflächen und mit zwei, auf den gegenüberliegenden Hauptflächen des Folienträgers angeordneten maschinenlesbaren Merkmalsbereichen (24, 26), die jeweils eine IR-absorbierende Substanz enthalten, wobei zumindest einer der maschinenlesbaren Merkmalsbereiche (24, 26) eine IR-absorbierende Substanz mit einem Absorptionsmaximum zwischen 800 nm und 1000 nm enthält.

## Beschreibung

Die Erfindung betrifft eine Sicherheitsvorrichtung mit maschinenlesbaren Merkmalsbereichen mit einer IR-absorbierenden Substanz. Die Erfindung betrifft auch ein Wertdokument mit einer solchen Sicherheitsvorrichtung, sowie ein Verfahren zur Prüfung einer solchen Sicherheitsvorrichtung.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen.

Um eine automatische Echtheitsprüfung und gegebenenfalls eine weitergehende sensorische Erfassung und Bearbeitung der damit versehenen Datenträger zu ermöglichen, sind die Sicherheitselemente oft maschinenlesbar ausgebildet. Für diesen Zweck werden die Sicherheitselemente beispielsweise mit Infrarot (IR) absorbierenden Stoffen versehen, deren IR-Signatur bei der Echtheitsprüfung von einem Infrarotsensor maschinell erfasst und ausgewertet werden kann.

Bekannte Sicherheitselemente mit IR-absorbierenden Stoffen sind allerdings oft relativ leicht nachzustellen und weisen daher nur eine geringe Absicherungswirkung auf.

Davon ausgehend liegt der Erfindung die Aufgabe zugrunde, eine gattungsgemäße Sicherheitsvorrichtung mit erhöhter Fälschungssicherheit anzugeben. Die Erfindung soll auch ein Wertdokument mit einer solchen Sicherheitsvorrichtung und ein Verfahren zur Prüfung einer solchen Sicherheitsvorrichtung bereitstellen.

Diese Aufgabe wird durch die Merkmale der unabhängigen Ansprüche gelöst. Weiterbildungen der Erfindung sind Gegenstand der abhängigen Ansprüche.

Die Erfindung enthält eine Sicherheitsvorrichtung mit einem Folienträger mit gegenüberliegenden Hauptflächen und mit zwei, auf den gegenüberliegenden Hauptflächen des Folienträgers angeordneten maschinenlesbaren Merkmalsbereichen.

Die maschinenlesbaren Merkmalsbereiche enthalten jeweils eine IR-absorbierende Substanz, wobei zumindest einer der maschinenlesbaren Merkmalsbereiche eine IR-absorbierende Substanz mit einem Absorptionsmaximum zwischen 800 nm und 1000 nm enthält.

IR-absorbierende Substanzen werden der Einfachheit halber nachfolgend auch oft kurz als IR-Substanzen oder IR-Stoffe bezeichnet. Wie weiter unten genauer erläutert, zeigen IR-absorbierte Substanzen typischerweise ein Absorptionsverhalten mit einem relativ flachen Absorptionsminimum im Wellenlängenbereich zwischen 800 nm und 1000 nm. Entsprechend zeigt die IR-Remission solcher IR-Substanzen im Wellenlängenbereich von 800 nm bis 1000 nm ein relativ flaches Maximum und fällt dann zu größeren Wellenlängen langsam wieder ab.

Die erfindungsgemäß eingesetzten IR-Substanzen mit einem Absorptionsmaximum zwischen 800 nm und 1000 nm und einem entsprechenden Minimum in der Remission zeigen demnach ein atypisches Absorptionsverhalten, und können dadurch bei einer Echtheitsprüfung zuverlässig von herkömmlichen IR-Substanzen unterschieden werden. Da IR- Substanzen mit atypischem Absorptionsverhalten für Fälscher deutlich schwerer als herkömmliche IR- Stoffe zu erhalten sind, steigt die Fälschungshürde signifikant.

Zudem kann, da auf beiden gegenüberliegenden Seiten des Folienträgers maschinenlesbare Merkmalsbereiche mit einer IR-absorbierenden Substanz vorliegen, die Sicherheitsvorrichtung bei einer Echtheitsprüfung von beiden Seiten her geprüft werden und das Vorliegen eines IR-Signals mit einem erwarteten Signal verglichen werden, um die Echtheit der Sicherheitsvorrichtung zu bewerten.

In einer vorteilhaften Ausgestaltung enthalten beide maschinenlesbaren Merkmalsbereiche eine IR-Substanz mit einem Absorptionsmaximum zwischen 800 nm und 1000 nm.

Bei einer anderen, ebenfalls vorteilhaften Ausgestaltung enthält nur einer der maschinenlesbaren Merkmalsbereiche eine IR-Substanz mit einem Absorptionsmaximum zwischen 800 nm und 1000 nm, während der andere der maschinenlesbare Merkmalsbereich eine IR-Substanz ohne Absorptionsmaximum zwischen 800 nm und 1000 nm enthält. Bei der letztgenannten IR-Substanz handelt es sich insbesondere um eine herkömmliche IR-Substanz mit typischem Absorptionsverhalten, also einem flachen Absorptionsminimum in dem genannten Wellenlängenbereich.

Die in zumindest einem der Merkmalsbereiche vorliegende IR-Substanz mit atypischen Absorptionsverhalten weist in einer besonders vorteilhaften Ausgestaltung bei einer Wellenlänge von 950 nm eine signifikant höhere Absorption als bei einer Wellenlänge von 850 nm auf, insbesondere eine um mindestens 3 %, um mindestens 5 %, oder sogar um mindestens 8% höhere Absorption.

Das Absorptionsmaximum der IR-Substanz mit atypischem Absorptionsverhalten liegt insbesondere zwischen 940 nm und 980 nm.

Mit Vorteil ist vorgesehen, dass die in zumindest einem der Merkmalsbereiche vorliegende IR-Substanz mit atypischen Absorptionsverhalten in dem Wellenlängenbereich von 800 nm bis 1000 nm eine Remission von 60% oder weniger aufweist.

Auf der Sicherheitsvorrichtung überlappen die beiden maschinenlesbaren Merkmalsbereiche einander in Projektion vorteilhaft zumindest bereichsweise. Dies ermöglicht, dass die beiden Merkmalsbereiche im Überlappungsbereich zusammenwirken und dabei beispielsweise ein maschinenlesbares Durchsichtsregister oder einen gemeinsamen maschinenlesbaren Code bilden.

In bevorzugten Ausgestaltungen bilden die beiden maschinenlesbaren Merkmalsbereiche jeweils einen maschinenlesbaren Code, wobei der Code insbesondere durch die Form und Größe der maschinenlesbaren Merkmalsbereiche und/oder durch die Form und Größe von Aussparungen in den maschinenlesbaren Merkmalsbereichen gebildet sein kann. Mit besonderem Vorteil bilden die beiden maschinenlesbaren Merkmalsbereiche zusammen einen zusätzlichen maschinenlesbaren Code, dessen Vorliegen als Echtheitsmerkmal gewertet werden kann. Die Sicherheitsvorrichtung kann auf diese Weise eine Vielzahl von Kodierungsmöglichkeiten bereitstellen.

Darüber hinaus kann auch die konkret gewählte Kombination der IR-Substanzen der beiden Merkmalsbereiche als Code dienen, die eine Sicherheitsvorrichtung oder ein damit versehendes Wertdokument charakterisiert.

Gemäß einer vorteilhaften Ausgestaltung liegen die beiden maschinenlesbaren Merkmalsbereiche jeweils vollflächig auf dem Folienträger vor. Eine Ortsabhängigkeit des IR-Signals kann sich auch bei vollflächigen Merkmalsbereichen beispielsweise durch bereichsweise unterschiedliche Konzentrationen der IR-Substanz ergeben, oder durch die Einbettung der Sicherheitsvorrichtung in ein Zieldokument. Beispielsweise kann ein Fenstersicherheitsfaden auf beiden Seiten vollflächig mit maschinenlesbaren Merkmalsbereichen versehen und teilweise so in das Papiersubstrat einer Banknote eingebettet sein, dass bei einer Messung der Vorderseite nur in Fensterbereichen, aber nicht in den dazwischenliegenden Stegbereichen des Papiersubstrats ein IR-Remissionssignal erfassbar ist. Analog kann bei einer Rückseitenmessung ein IR-Remissionssignal nur Bereichen erfassbar sein, die Stegbereichen der Vorderseite gegenüberliegen, aber nicht Bereichen, die Fensterbereichen der Vorderseite gegenüberliegen, wie weiter unten genauer dargestellt.

Besonders bevorzugt ist gegenwärtig allerdings, dass einer oder beide der maschinenlesbaren Merkmalsbereiche strukturiert in Form von Mustern, Zeichen oder einer Codierung vorliegen. Eine strukturiere Ausbildung der Merkmalsbereiche erlaubt insbesondere eine einfache Erzeugung räumlicher Codierungen, wie etwa eines Barcodes.

Bei einer Weiterbildung der Erfindung ist zumindest einer der maschinenlesbaren Merkmalsbereiche bereichsweise mit Papierstegen oder einem IR-Blocker bedeckt. Papierstege bzw. IR-Blocke können auch Teil des Zieldokuments sein, in das eine erfindungsgemäße Sicherheitsvorrichtung eingebettet ist.

Die Sicherheitsvorrichtung stellt mit Vorteil ein Sicherheitselement, insbesondere einen Sicherheitsfaden oder ein Sicherheitsband dar.

Die Erfindung enthält dabei auch ein Wertdokument, insbesondere eine Banknote, mit einem solchen Sicherheitselement, wobei das Sicherheitselement in vorteilhaften Ausgestaltungen zumindest teilweise in das Innere des Wertdokuments eingebettet ist.

In einer anderen, ebenfalls vorteilhaften Ausbildung stellt die Sicherheitsvorrichtung selbst ein Wertdokument, insbesondere eine Banknote dar.

Die Erfindung enthält schließlich auch ein Verfahren zur Prüfung einer Sicherheitsvorrichtung der beschriebenen Art, bei dem die Sicherheitsvorrichtung mit IR-Strahlung beaufschlagt wird, die von der Sicherheitsvorrichtung remittierte IR-Strahlung als IR-Signal gemessen wird und aus dem gemessenen IR-Signal ermittelt wird, ob die Sicherheitsvorrichtung einen Merkmalsbereich mit einer IR-absorbierenden Substanz mit einem Absorptionsmaximum zwischen 800 nm und 1000 nm enthält.

Mit Vorteil wird bei dem Verfahren sowohl die Vorder- als auch die Rückseite der Sicherheitsvorrichtung mit der IR-Strahlung beaufschlagt und die von der Sicherheitsvorrichtung remittierte IR-Strahlung jeweils als IR-Signal gemessen.

Dabei kann mit Vorteil ermittelt werden, ob die Sicherheitsvorrichtung zwei Merkmalsbereiche mit einer IR-Substanz mit atypischem Absorptionsverhalten enthält bzw. einen Merkmalsbereich mit einer IR-Substanz mit atypischem Absorptionsverhalten und einen Merkmalsbereich mit einer IR-Substanz mit typischem Absorptionsverhalten enthält.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: schematisch eine Banknote mit einem erfindungsgemäßen Fenstersicherheitsfaden im Querschnitt,
- Fig. 2: schematisch das mit einem IR-Sensor erfasste Erscheinungsbild der Banknote der Fig. 1 jeweils in Aufsicht, in (a) von der Vorderseite und in (b) von der Rückseite,
- Fig. 3: schematisch die IR-Remission eines IR-Stoffes mit atypischem Absorptionsverhalten verglichen mit der IR-Remission von zwei IR-Substanzen mit typischem Absorptionsverhalten,
- Fig. 4: eine Abwandlung des Ausführungsbeispiels der Fig. 2, bei der der Fenstersicherheitsfaden nur in seiner unterseitigen Beschichtung eine IR-Substanz mit atypischem Absorptionsverhalten aufweist,
- Fig. 5: ein weiteres Ausführungsbeispiel der Erfindung, wobei (a) schematisch eine Querschnittsdarstellung einer Banknote mit einem erfindungsgemäßen Fenstersicherheitsfaden zeigt, und (b) und (c) schematisch das mit einem IR-Sensor erfasste Erscheinungsbild der Banknote in Aufsicht von der Vorderseite bzw. Rückseite zeigen,
- Fig. 6: in einer Darstellung wie Fig. 5 ein weiteres Ausführungsbeispiel der Erfindung, bei dem sowohl die obere Beschichtung als auch die untere Beschichtung des Fenstersicherheitsfadens strukturiert ausgebildet ist,
- Fig. 7: in einer Darstellung wie Fig. 5 ein weiteres Ausführungsbeispiel der Erfindung, bei dem ein erfindungsgemäßes Sicherheitselement nicht in eine Papierbanknote eingebettet wird, sondern Teil einer Polymerbanknote darstellt, und
- Fig. 8: in einer Darstellung wie Fig. 5 ein weiteres Ausführungsbeispiel der Erfindung, bei dem die Sicherheitsvorrichtung durch eine Polymerbanknote gebildet ist.

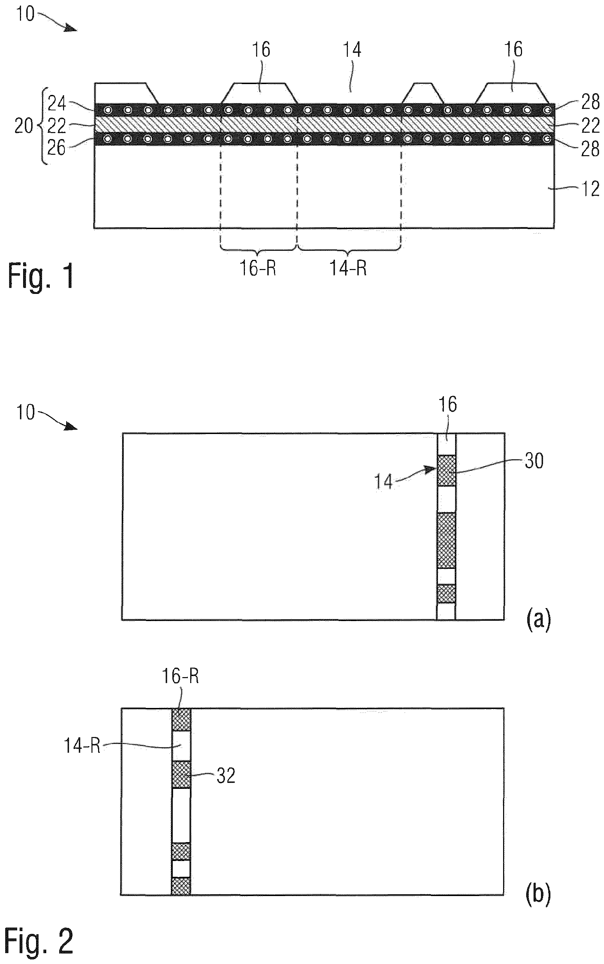

Die Erfindung wird nun am Beispiel von Banknoten und Sicherheitselementen für Banknoten erläutert. Figur 1 zeigt dazu schematisch eine Banknote 10 mit einem erfindungsgemäßen Fenstersicherheitsfaden 20 im Querschnitt. Der Fenstersicherheitsfaden 20 ist dabei teilweise in das Papiersubstrat 12 der Banknote 10 eingebettet, so dass er in Fensterbereichen 14 an der Oberfläche der Banknote hervortritt, während er in den dazwischen liegenden Stegbereichen 16 im Inneren des Papiersubstrats 12 eingebettet ist.

Der Fenstersicherheitsfaden 20 enthält eine Trägerfolie 22 mit gegenüberliegenden oberen und unteren Hauptflächen. Als Besonderheit sind die beiden Hauptflächen zur Ausbildung maschinenlesbarer Merkmalsbereiche jeweils vollflächig mit einer einen speziellen IR-Stoff 28 enthaltenden Beschichtung 24 bzw. 26 versehen. Bei dem speziellen IR-Stoff 28 handelt es sich um eine IR-Substanz mit atypischen Absorptionsverhalten, nämlich einem deutlichen Absorptionsmaximum zwischen 800 nm und 1000 nm.

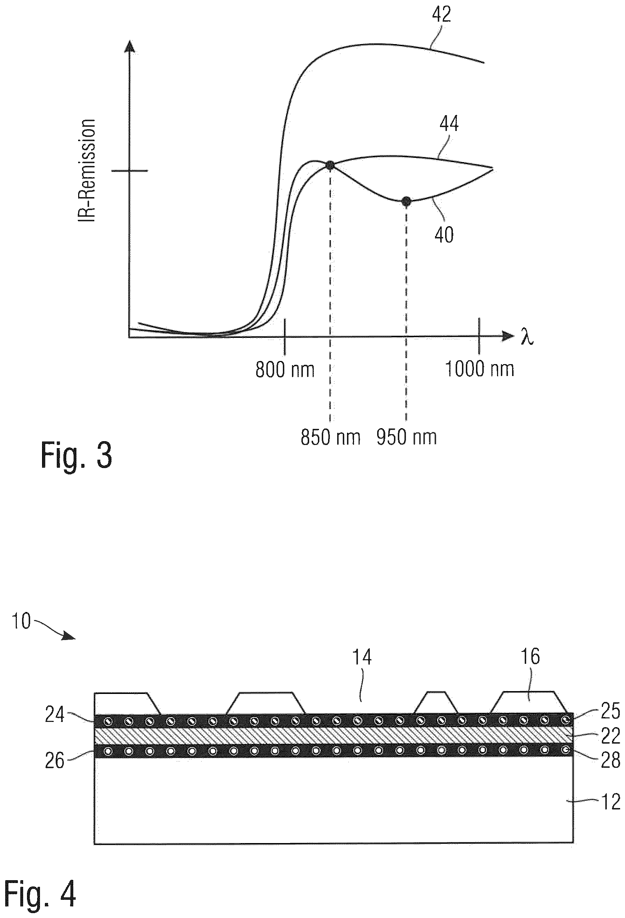

Zur näheren Erläuterung zeigt Fig. 3 schematisch die IR-Remission des verwendeten IR-Stoffes 28 (Remissionskurve 40) verglichen mit der IR-Remission von zwei IR-Substanzen mit typischem Absorptionsverhalten (Remissionskurven 42, 44). Die IR-Substanzen mit typischem Absorptionsverhalten weisen im Wellenlängenbereich zwischen 800 nm und 1000 nm ein in der Regel flaches Absorptionsminium auf, so dass die IR-Remission in diesem Wellenlängenbereich entsprechend ein flaches Maximum zeigt und zu größeren Wellenlängen langsam wieder abfällt. Die Remissionskurve 42 stammt dabei von einem ersten IR-Stoff mit relativ geringerer Absorption und daher hoher Remission, während die Remissionskurve 44 von einem zweiten IR-Stoff mit relativ hoher Absorption und daher niedriger Remission stammt.

Im Gegensatz dazu zeigt der spezielle IR-Stoff 28 eine IR-Remission 40 mit einem hohen Remissionswert bei einer Wellenlänge von etwa 850 nm und einem ausgeprägten Minimum bei einer Wellenlänge von etwa 950 nm, bevor die Remission zu einer Wellenlänge von 1000 nm hin wieder zunimmt. Gleichzeitig liegt die Remission des IR-Stoffs 28 im Bereich von 800 bis 1000 nm vorteilhaft nicht über 60%.

Ein solcher spezieller IR-Stoff kann beispielsweise unter Verwendung einer IR-absorbierende Druckfarbe erzeugt werden, der kommerziell von der Firma SICPA unter dem Handelsnamen SICPATALK^{®} NFB erhältlich ist.

Es versteht sich, dass der exakte Verlauf der Remissionskurven und die genaue Größe der IR-Remission von den konkret verwendeten IR-Substanzen abhängt und Fig. 3 nur schematisch der Illustration der Unterschiede zwischen einem typischen und einem atypischen Absorptionsverhalten dient.

Figur 2 zeigt nun schematisch das mit einem IR-Sensor erfasste Erscheinungsbild der Banknote 10 der Fig. 1 jeweils in Aufsicht von der Vorderseite (Fig. 2(a)) bzw. der Rückseite (Fig. 2(b)). Bei der Vorderseitenmessung der Fig. 2(a) wird in den Fensterbereichen 14 ein IR-Signal 30 gemessen, während in den Stegbereichen 16 kein IR-Signal erfasst wird. Bei der Rückseitenmessung der Fig. 2(b) ergibt sich ein invertiertes Erscheinungsbild: dort wird in den Bereichen 16-R, die den Stegbereichen 16 der Vorderseite gegenüberliegen, ein IR-Signal 32 erhalten, während in den Bereichen 14-R, die den Fensterbereichen 14 der Vorderseite gegenüberliegen, kein IR-Signal erhalten wird.

Der Mechanismus der Signalentstehung bei der Remissionsmessung ist theoretisch noch nicht vollständig verstanden - da das Rückseitensignal in der geometrischen Form der Vorderseiten-Stegbereiche 16 auftritt, wird das auf der Rückseite gemessene IR-Signal 32, ohne an eine bestimmte Erklärung gebunden sein zu wollen, gegenwärtig auf Reflexionen der IR-Strahlung an den Stegbereichen 16 der Vorderseite zurückgeführt.

Bei der Echtheitsprüfung mittels IR-Sensor, beispielsweise in einer Banknotenbearbeitungsmaschine kann die Banknote 10 sowohl von der Vorderseite als auch der Rückseite her geprüft werden und das Vorliegen eines IR-Signals mit passender Ortsverteilung auf beiden Seiten als Hinweis auf die Echtheit oder eine fehlende Echtheit der Note gewertet werden. Darüber hinaus lässt sich der IR-Stoff 28 durch sein atypisches Absorptionsverhalten (Remissionskurve 40) leicht von anderen, herkömmlichen IR-Substanzen mit typischem Absorptionsverhalten (Remissionskurven 42, 44) unterscheiden.

Figur 4 zeigt eine Abwandlung des Ausführungsbeispiels der Fig. 2, bei der der Fenstersicherheitsfaden 20 nur in seiner unterseitigen Beschichtung 26 den speziellen IR-Stoff 28 mit atypischem Absorptionsverhalten aufweist, während die oberseitige Beschichtung 24 eine IR-Substanz 25 mit typischem Absorptionsverhalten enthält, beispielsweise einen IR-Stoff mit einem flachen Absorptionsminimum ähnlich den Remissionskurven 42 oder 44 der Fig. 3.

Auch bei diesem Ausführungsbeispiel kann die Banknote 10 bei der Echtheitsprüfung mittels IR-Sensor sowohl von der Vorderseite als auch der Rückseite geprüft werden und das Vorliegen eines IR-Signals mit passender Ortsverteilung und passendem Absorptionsverhalten auf den beiden Seiten als Hinweis auf die Echtheit oder fehlende Echtheit der Note gewertet werden.

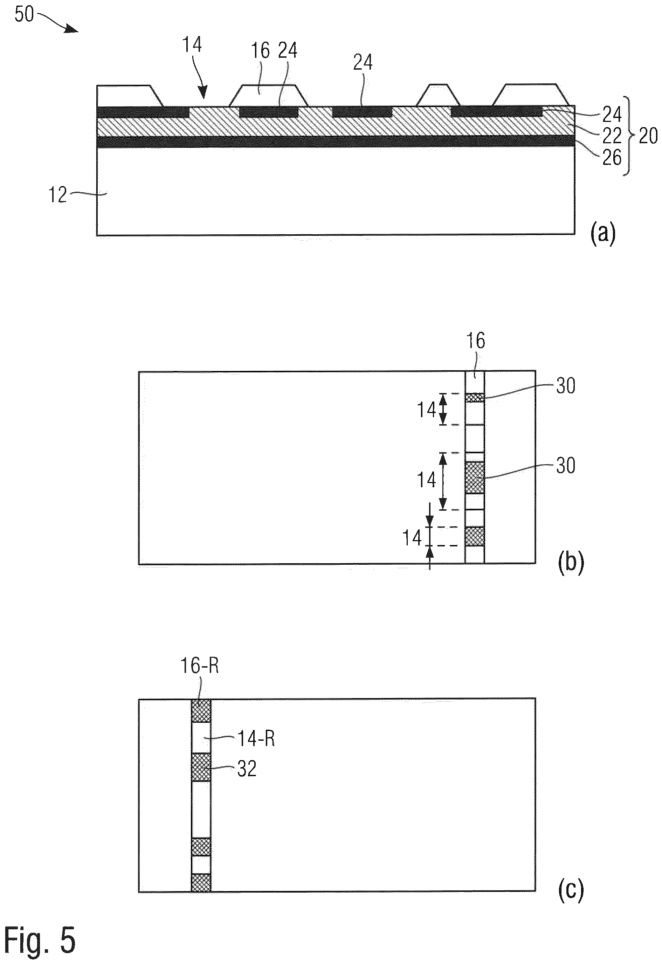

Ein weiteres Ausführungsbeispiel der Erfindung ist in Fig. 5 gezeigt, wobei Fig. 5(a) eine schematische Querschnittsdarstellung einer Banknote 50 mit einem erfindungsgemäßen Fenstersicherheitsfaden 20 zeigt, und Fig. 5(b) und 5(c) schematisch das mit einem IR-Sensor erfasste Erscheinungsbild der Banknote in Aufsicht von der Vorderseite (Fig. 5(b)) bzw. der Rückseite (Fig. 5(c)) zeigen.

Die durch die Beschichtungen 24, 26 gebildeten Merkmalsbereiche des Fenstersicherheitsfadens 20 enthalten dabei eine jeweils eine IR-Substanz, auch wenn diese in Fig. 5 und den nachfolgenden Figuren der Einfachheit halber nicht mehr separat durch Symbole veranschaulicht ist.

Bei dem Ausführungsbeispiel der Fig. 5 ist die obere Beschichtung 24 des Fenstersicherheitsfadens 20 im Unterschied zur Gestaltung der Figuren 2 und 4 strukturiert ausgebildet, liegt also nur in Teilbereichen der Fadenoberfläche vor, während die untere Beschichtung 26 vollflächig ausgebildet ist.

Bei der in Fig. 5(b) gezeigten Vorderseitenmessung wird in den Fensterbereichen 14 nur an den Stellen ein IR-Signal 30 erhalten, an denen auch Beschichtungsmaterial 24 vorliegt, während in den Stegbereichen 16 kein IR-Signal erfasst wird, selbst wenn dort Beschichtungsmaterial vorliegt.

Da die untere Beschichtung 26 vollflächig ausgebildet ist ergibt sich bei der in Fig. 5(c) gezeigten Rückseitenmessung dasselbe Erscheinungsbild wie bei Fig. 2(b): in den den Stegbereichen 16 gegenüberliegenden Bereichen 16-R wird jeweils ein IR-Signal 32 erhalten, während in den den Fensterbereichen 14 gegenüberliegenden Bereichen 14-R kein IR-Signal erhalten wird.

Zumindest eine der Beschichtungen 24, 26 enthält einen IR-Stoff mit atypischem Absorptionsverhalten, also mit einem Absorptionsmaximum zwischen 800 nm und 1000 nm, die andere der beiden Beschichtungen kann auch einen IR-Stoff mit typischem Absorptionsverhalten enthalten. Besonders bevorzugt enthalten allerdings beide Beschichtungen 24, 26 einen IR-Stoff mit atypischem Absorptionsverhalten.

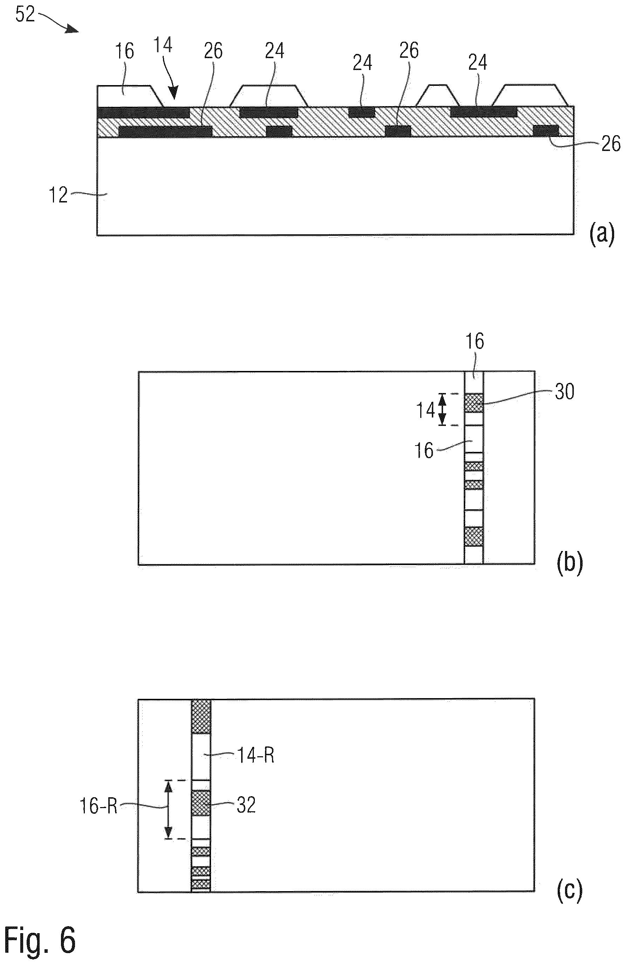

Bei dem in Fig. 6 dargestellten, weiteren Ausführungsbeispiel der Erfindung zeigt Fig. 6(a) eine Querschnittsdarstellung einer Banknote 52 mit einem erfindungsgemäßen Fenstersicherheitsfaden 20, und zeigen Fig. 6(b) und 6(c) das mit einem IR-Sensor erfasste Erscheinungsbild der Banknote 52 jeweils in schematischer Aufsicht von der Vorderseite (Fig. 6(b)) bzw. der Rückseite (Fig. 6(c)) der Banknote.

Bei dem Ausführungsbeispiel der Fig. 6 ist sowohl die obere Beschichtung 24 als auch die untere Beschichtung 26 des Fenstersicherheitsfadens 20 strukturiert ausgebildet. Zumindest eine, vorteilhaft beide Beschichtungen 24, 26, enthalten einen IR-Stoff mit atypischem Absorptionsverhalten, also einem Absorptionsmaximum zwischen 800 nm und 1000 nm.

Bei der Vorderseitenmessung der Fig. 6(b) wird in den Fensterbereichen 14 nur an den Stellen ein IR-Signal 30 erhalten, an denen auch Beschichtungsmaterial 24 vorliegt, während in den Stegbereichen 16 kein IR-Signal erfasst wird, auch wenn dort Beschichtungsmaterial vorliegt. Bei der Rückseitenmessung der Fig. 6(c) wird in den den Stegbereichen 16 gegenüberliegenden Bereichen 16-R nur dort ein IR-Signal 32 erhalten, wo auch Beschichtungsmaterial 26 vorliegt, während in den den Fensterbereichen 14 gegenüberliegenden Bereichen 14-R kein IR-Signal erhalten wird.

Die charakteristische Ortsverteilungen der IR-Signale 30 und 32 und das Absorptionsverhalten der IR-Stoffe der Beschichtungen 24, 26 (typisch bzw. atypisch) erlauben eine zuverlässige Echtheitsprüfung der Banknote 52.

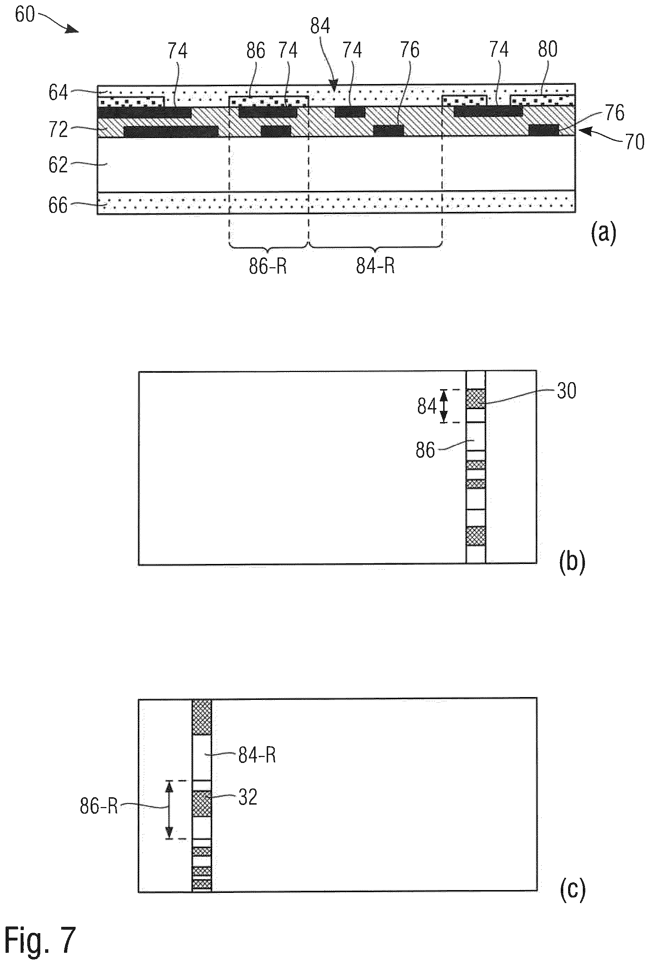

Figur 7 zeigt ein weiteres Ausführungsbeispiel der Erfindung, bei dem das Sicherheitselement nicht in eine Papierbanknote eingebettet ist, sondern Teil einer Polymerbanknote 60 darstellt.

Mit Bezug zunächst auf Fig. 7(a) enthält die Polymerbanknote 60 ein Polymersubstrat 62, das auf beiden Seiten mit Deckweiß- bzw. Farbannahmeschichten 64 bzw. 66 versehen ist. Zwischen dem Polymersubstrat 62 und der oberen Farbannahmeschicht 64 ist ein erfindungsgemäßes Sicherheitselement 70 angeordnet, das einen oberen Merkmalsbereich 74, einen unteren Merkmalsbereich 76 und eine zwischen den Merkmalsbereichen liegende Folienlage 72, enthält. Zudem ist auf dem Sicherheitselement 70 bereichsweise ein IR-Blocker 80 aufgedruckt, so dass auf der Polymerbanknote IR-Stegbereiche 86 mit IR-Blocker 80 und IR-Fensterbereiche 84 ohne IR-Blocker entstehen.

Zumindest einer der Merkmalsbereiche 74, 76 enthält einen speziellen IR-Stoff mit atypischem Absorptionsverhalten, also einem Absorptionsmaximum zwischen 800 nm und 1000 nm. Der andere Merkmalsbereich kann einen IR-Stoff mit typischem Absorptionsverhalten enthalten, besonders bevorzugt enthalten allerdings beide Merkmalsbereiche 74, 76 den genannten IR-Stoff mit atypischem Absorptionsverhalten.

Im Ausführungsbeispiel der Fig. 7 sind die beiden Merkmalsbereiche 74, 76 strukturiert ausgebildet, sie können allerdings, analog zu den oben beschriebenen Ausgestaltungen, auch vollflächig ausgebildet sein.

Figur 7(b) zeigt das Ergebnis eine Vorderseitenmessung der Banknote 60 mit einem IR-Sensor. Bei der Messung wird ein IR-Signal 30 nur in den IR-Fensterbereichen 84 erhalten, und auch in den IR-Fensterbereichen nur an den Stellen, an denen auch der oberseitige Merkmalsbereich 74 mit dem IR-Stoff vorliegt. In den IR-Stegbereichen 86 wird dagegen wegen der absorbierenden Wirkung des IR-Blockers 80 kein IR-Signal erfasst, auch wenn unterhalb der IR-Stegbereiche ein IR-Stoff vorliegt.

Bei der Rückseitenmessung der Fig. 7(c) wird nur in den Bereichen 86-R, die den IR-Stegbereichen 86 gegenüberliegen, ein IR-Signal 32 erhalten, und auch in diesen Bereichen 86-R nur an den Stellen, an denen der unterseitige Merkmalsbereich 76 mit dem IR-Stoff vorliegt. In den Bereichen 84-R, die den IR-Fensterbereichen 84 der Vorderseite gegenüberliegen, wird dagegen kein IR-Signal erhalten. Analog zur Erläuterung bei Fig. 2 wird die Signalerzeugung bei der Rückseitenmessung gegenwärtig auf Reflexionen an dem IR-Blocker 80 der Vorderseite zurückgeführt.

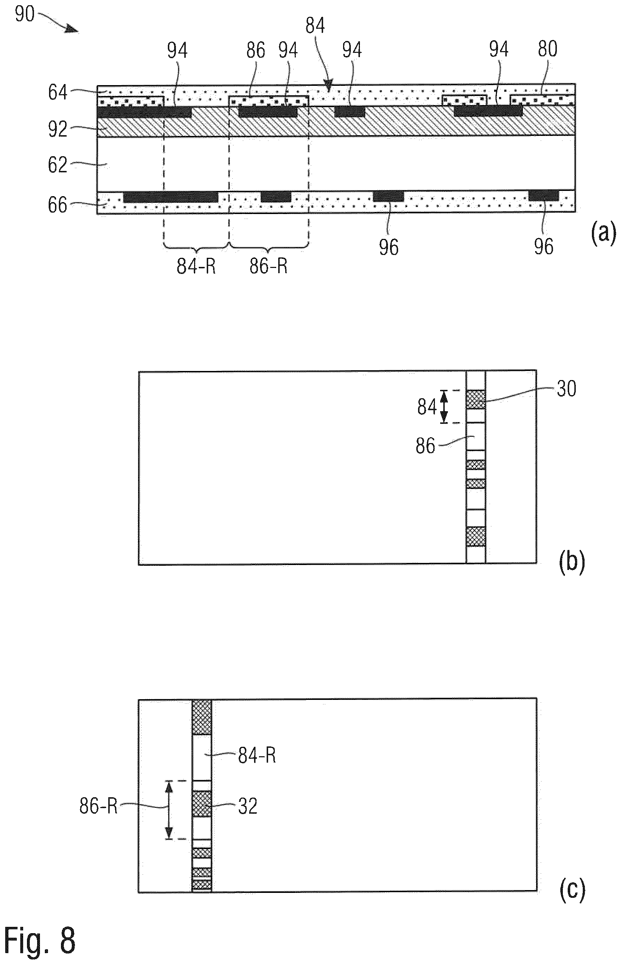

Bei dem Ausführungsbeispiel der Fig. 8 ist die Sicherheitsvorrichtung nicht durch ein in ein Wertdokument auf- oder eingebrachtes Sicherheitselement, sondern durch das Wertdokument selbst gebildet.

Konkret zeigt Fig. 8(a) im Querschnitt eine Polymerbanknote 90 mit einem Polymersubstrat 62, das auf beiden Seiten mit einer Deckweiß- bzw. Farbannahmeschicht 64 bzw. 66 versehen ist. Auf der Oberseite des Polymersubstrats 62 ist ein oberer Merkmalsbereich 94, auf der gegenüberliegenden Unterseite des Polymersubstrats 62 ein unterer Merkmalsbereich 96 angeordnet. Zusätzlich kann eine Zwischenlage 92 vorgesehen sein, die durch eine Folienlage oder eine Druckschicht gebildet sein kann. Auf den oberen Merkmalsbereich 94 ist zudem bereichsweise ein IR-Blocker 80 aufgedruckt, so dass auf der Polymerbanknote IR-Stegbereiche 86 mit IR-Blocker 80 und IR-Fensterbereiche 84 ohne IR-Blocker entstehen.

Zumindest einer der Merkmalsbereiche 94, 96 enthält einen speziellen IR-Stoff mit atypischem Absorptionsverhalten, also einem Absorptionsmaximum zwischen 800 nm und 1000 nm. Der andere Merkmalsbereich kann einen IR-Stoff mit typischem Absorptionsverhalten enthalten, besonders bevorzugt enthalten allerdings beide Merkmalsbereiche 94, 96 den genannten IR-Stoff mit atypischem Absorptionsverhalten.

Die beiden Merkmalsbereiche 94, 96 sind im Ausführungsbeispiel strukturiert ausgebildet, sie können allerdings, analog zu den oben beschriebenen Ausgestaltungen, auch vollflächig ausgeführt sein.

Figur 8(b) zeigt eine Vorderseitenmessung der Polymerbanknote 90 mit einem IR-Sensor. Dabei wird ein IR-Signal 30 nur in den IR-Fensterbereichen 84 erhalten, und auch in den IR-Fensterbereichen nur an den Stellen, an denen auch der oberseitige Merkmalsbereich 94 mit dem IR-Stoff vorliegt. In den IR-Stegbereichen 86 wird dagegen wegen der absorbierenden Wirkung des IR-Blockers 80 kein IR-Signal erfasst, auch wenn dort unterhalb der Stegbereiche 86 ein IR-Stoff vorliegt.

Bei der Rückseitenmessung der Fig. 8(c) wird nur in den Bereichen 86-R, die den IR-Stegbereichen 86 gegenüberliegen, ein IR-Signal 32 erhalten, und auch in diesen Bereichen 86-R nur an den Stellen, an denen der unterseitige Merkmalsbereich 96 mit dem IR-Stoff vorliegt. In den Bereichen 84-R, die den IR-Fensterbereichen 84 der Vorderseite gegenüberliegen, wird dagegen kein IR-Signal erhalten.

### Bezugszeichenliste

- 10: Banknote
- 12: Papiersubstrat
- 14: Fensterbereiche
- 14-R: den Fensterbereichen gegenüberliegende Bereiche
- 16: Stegbereiche
- 16-R: den Stegbereichen gegenüberliegende Bereiche
- 20: Fenstersicherheitsfaden
- 22: Trägerfolie
- 24, 26: Beschichtung
- 28: IR-Stoff
- 30,32: IR-Signal
- 40,42,44: Remissionskurven
- 50,52: Banknoten
- 60: Polymerbanknote
- 62: Polymersubstrat
- 64, 66: Deckweiß- bzw. Farbannahmeschichten
- 70: Sicherheitselement
- 72: Folienlage
- 74,76: Merkmalsbereiche
- 80: IR-Blocker
- 84: IR-Fensterbereiche
- 84-R: den IR-Fensterbereichen gegenüberliegende Bereiche
- 86: IR-Stegbereichen
- 86-R: den IR-Stegbereichen gegenüberliegende Bereiche
- 90: Polymerbanknote
- 92: Zwischenlage
- 94,96: Merkmalsbereiche

## Patentansprüche

1. Sicherheitsvorrichtung mit einem Folienträger mit gegenüberliegenden Hauptflächen und mit zwei, auf den gegenüberliegenden Hauptflächen des Folienträgers angeordneten maschinenlesbaren Merkmalsbereichen, die jeweils eine IR-absorbierende Substanz enthalten, wobei zumindest einer der maschinenlesbaren Merkmalsbereiche eine IR-absorbierende Substanz mit einem Absorptionsmaximum zwischen 800 nm und 1000 nm enthält.

2. Sicherheitsvorrichtung nach Anspruch 1, **dadurch gekennzeichnet, dass** beide maschinenlesbaren Merkmalsbereiche eine IR-Substanz mit einem Absorptionsmaximum zwischen 800 nm und 1000 nm enthalten.

3. Sicherheitsvorrichtung nach Anspruch 1, **dadurch gekennzeichnet, dass** nur einer der maschinenlesbaren Merkmalsbereiche eine IR-Substanz mit einem Absorptionsmaximum zwischen 800 nm und 1000 nm enthält und der andere der maschinenlesbare Merkmalsbereich eine IR-Substanz ohne Absorptionsmaximum zwischen 800 nm und 1000 nm enthält.

4. Sicherheitsvorrichtung nach wenigstens einem der Ansprüche 1 bis 3, **dadurch gekennzeichnet, dass** die genannte, in zumindest einem der Merkmalsbereiche vorliegende IR-Substanz bei einer Wellenlänge von 950 nm eine signifikant höhere Absorption aufweist als bei einer Wellenlänge von 850 nm, insbesondere eine um mindestens 3%, mindestens 5%, oder sogar um mindestens 8% höhere Absorption.

5. Sicherheitsvorrichtung nach wenigstens einem der Ansprüche 1 bis 4, **dadurch gekennzeichnet, dass** die genannte, in zumindest einem der Merkmalsbereiche vorliegende IR-Substanz in dem Wellenlängenbereich von 800 nm bis 1000 nm eine Remission von 60% oder weniger aufweist.

6. Sicherheitsvorrichtung nach wenigstens einem der Ansprüche 1 bis 5, **dadurch gekennzeichnet, dass** die beiden maschinenlesbaren Merkmalsbereiche einander in Projektion zumindest bereichsweise überlappen.

7. Sicherheitsvorrichtung nach wenigstens einem der Ansprüche 1 bis 6, **dadurch gekennzeichnet, dass** die beiden maschinenlesbaren Merkmalsbereiche jeweils einen maschinenlesbaren Code bilden, vorzugsweise, dass die beiden maschinenlesbaren Merkmalsbereiche zusammen einen zusätzlichen maschinenlesbaren Code bilden.

8. Sicherheitsvorrichtung nach wenigstens einem der Ansprüche 1 bis 7, **dadurch gekennzeichnet, dass** die beiden maschinenlesbaren Merkmalsbereiche jeweils vollflächig auf dem Folienträger vorliegen.

9. Sicherheitsvorrichtung nach wenigstens einem der Ansprüche 1 bis 8, **dadurch gekennzeichnet, dass** einer oder beide der maschinenlesbaren Merkmalsbereiche strukturiert in Form von Mustern, Zeichen oder einer Codierung vorliegen.

10. Sicherheitsvorrichtung nach wenigstens einem der Ansprüche 1 bis 9, **dadurch gekennzeichnet, dass** einer der maschinenlesbaren Merkmalsbereiche bereichsweise mit Papierstegen oder einem IR-Blocker bedeckt ist.

11. Sicherheitsvorrichtung nach wenigstens einem der Ansprüche 1 bis 10, **dadurch gekennzeichnet, dass** die Sicherheitsvorrichtung ein Sicherheitselement, insbesondere ein Sicherheitsfaden oder ein Sicherheitsband ist.

12. Sicherheitsvorrichtung nach wenigstens einem der Ansprüche 1 bis 10, **dadurch gekennzeichnet, dass** die Sicherheitsvorrichtung ein Wertdokument, insbesondere eine Banknote ist.

13. Wertdokument, insbesondere Banknote, mit einer Sicherheitsvorrichtung nach Anspruch 11.

14. Verfahren zur Prüfung einer Sicherheitsvorrichtung nach einem der Ansprüche 1 bis 12, bei dem die Sicherheitsvorrichtung mit IR-Strahlung beaufschlagt wird, die von der Sicherheitsvorrichtung remittierte IR-Strahlung als IR-Signal gemessen wird und aus dem gemessenen IR-Signal ermittelt wird, ob die Sicherheitsvorrichtung einen Merkmalsbereich mit einer IR-absorbierenden Substanz mit einem Absorptionsmaximum zwischen 800 nm und 1000 nm enthält.
